(19) Europäisches Patentamt / European Patent Office / Office européen des brevets

(11) **EP 2 385 721 A1**

(12) **EUROPEAN PATENT APPLICATION**

(43) Date of publication:
**09.11.2011 Bulletin 2011/45**

(51) Int Cl.:
*H04W 28/16* (2009.01)     *H04L 12/56* (2006.01)

(21) Application number: **10290237.6**

(22) Date of filing: **03.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Alcatel Lucent
92700 Colombes (FR)**

(72) Inventors:
• **Brigant, Eric
78141 Velizy (FR)**

• **Bussschbach, Peter
Murray Hill, NJ 07974-0636 (US)**
• **Umarale, Sudhir
Murray Hill, NJ 07974-0636 (US)**
• **Thiebaut, Laurent
91620 Nozay (FR)**
• **Allan, Keith
Ottawa, ON K2 (CA)**

(74) Representative: **El Manouni, Josiane et al
32 Avenue Kléber
92707 Colombes Cedex (FR)**

(54) **Providing enhanced quality of service differentiation in a mobile communication system**

(57)     One object of the present invention, in an embodiment, is a method for providing Enhanced Quality of Service (QoS) differentiation in a mobile communication system, said method comprising:
- providing user differentiation, based on a QoS parameter representative of a bit rate, referred to as Weighted Fair Bit Rate WFBR, associated with a user and such that, in case of congestion, user traffic is throttled at a bit rate referred to as throttling bit rate, function of the WFBR associated with the user.

FIG_1

**Description**

The present invention generally relates to mobile communication networks and systems.

Detailed descriptions of mobile communication networks and systems can be found in the literature, such as in particular Technical Specifications published by standardisation bodies such as for example 3GPP (3rd Generation Partnership Project).

In such systems, a mobile station or User Equipment (UE) has access to mobile services (such as in particular IP-based mobile services) via an Access Network (such as in particular packet-based Access Network) comprising a Radio Access Network (RAN) and a Core Network (CN).

Examples of 3GPP-based mobile communication systems include 2G GSM/GPRS, 3G UMTS, 3G LTE also known as EPS (Evolved Packet System). Examples of Radio Access Network (RAN) include GERAN (for 2G GSM/ GPRS), UTRAN (for 3G UMTS), EUTRAN (for 3G LTE). Examples of packet Core Network include GPRS (for 2G or 3G) and Evolved Packet Core EPC (for 2G, 3G UTRAN and 3G LTE).

QoS support is one of the most important issues in such systems, in particular in packet- based systems.

Some concepts on which QoS support is based are briefly recalled, for example for EPS.

An EPS bearer uniquely identifies traffic flows that receive a common QoS treatment between an UE and a Gateway such as Packet Data Gateway PGW. An EPS bearer is the level of granularity for bearer level QoS control in the EPC and its associated RAN (GERAN, UTRAN and EUTRAN). That is, all traffic mapped to the same EPS bearer receive the same bearer level packet forwarding treatment (e.g. scheduling policy, queue management policy, rate shaping policy, RLC configuration, etc.). Providing different packet forwarding treatment requires separate EPS bearers. A dedicated bearer can be a Guaranteed Bit Rate (GBR) bearer (i.e. with guaranteed or reserved resources), or a non Guaranteed Bit Rate non-GBR bearer (i.e. with non guaranteed or non reserved resources). A Radio Bearer transports the packets of an EPS bearer between UE and a RAN, an S1 (respectively Iu) Bearer transports the packets of an EPS bearer between a Serving Gateway SGW and an eNodeB (respectively an UTRAN), and an S5/S8 bearer transports the packets of an EPS bearer between SGW and PGW.

An EPS bearer (GBR or non GBR) is associated with the following bearer level QoS parameters: QoS Class Identifier (QCI), Allocation and Retention Priority (ARP). A QCI is a scalar that is used as a reference to access-node specific parameters that control bearer level forwarding treatment and that have been pre-configured by the operator controlling the access node (e.g. eNodeB). QCI is used to differentiate between different services. A GBR EPS bearer is additionally associated with the following bearer level QoS parameters: Guaranteed Bit Rate (GBR), Maximum Bit Rate (MBR). Additional QoS parameters APN-AMBR (Access Point Name- Aggregate Maximum Bit Rate) and UE-AMBR (UE-Aggregate Maximum Bit Rate) apply to an aggregate set of Non-GBR bearers.

QoS control includes signalling procedures for managing bearers and controlling their QoS by the network. Such procedures include PCC (Policy and Charging Control) procedures between PCRF (Policy and Charging Rules Function) and PCEF (Policy and Charging Enforcement Function) located in PGW, and bearer establishment or modification procedures between the different EPC/RAN network nodes involved, including e.g. PGW, SGW, MME (Mobility Management Entity) and RAN.

More details on such concepts can be found in particular in 3GPP TS 23.401 and in 3GPP TS 23.203.

■ There is a need to improve QoS support in such systems, in particular there is a need to provide user differentiation as well as service differentiation, i.e. differentiating the treatment received by different users for a same service especially in congestion situations.

These and other objects are achieved, in one aspect of the present invention, by a method for providing Enhanced Quality of Service QoS differentiation in a mobile communication system, said method comprising:

- providing user differentiation, based on a QoS parameter representative of a bit rate, referred to as Weighted Fair Bit Rate WFBR, associated with a user and such that, in case of congestion, user traffic is throttled at a bit rate referred to as throttling bit rate, function of the WFBR associated with the user.

These and other objects are achieved, in another aspect of the present invention, by network entities comprising means for performing such method. Said network entities may include: network entity in charge of policy control (such as PCRF) and network entities in charge of bearer services (such as PGW, SGW, MME or S4 SGSN, and EUTRAN for EPS, or GGSN, SGSN and UTRAN for UMTS).

Some embodiments of apparatus and/or methods in accordance with embodiments of the present invention are now described, by way of example only, and with reference to the accompanying drawings, in which:

- Figure 1 is intended to illustrate providing QoS in an embodiment of the present invention,

- Figure 2 is intended to illustrate a system such as for example EPS, adapted for providing QoS in an embodiment of the present invention.

As indicated above, there is a need to provide user differentiation as well as service differentiation, i.e. differentiating the treatment received by different users for a same service.

Different approaches could be used for providing service and user differentiation.

A first approach could be based on ARP (Allocation Retention Priority).

In 3GPP Standard, the ARP parameter is defined firstly to describe the expected allocation and pre-emption behaviour in the admission control functions. The ARP usage could be extended to differentiate the radio scheduling schemes (e.g. for Gold, Silver and Bronze users) in UTRAN or LTE networks. This could be seen as a diversion of its first objective.

This first approach would have at least following drawbacks:

- Using ARP for traffic scheduling especially in congestion cases would mix two information: i) the importance of a bearer in admission control and ii) the throughput to allocate to a bearer (a bearer may be life critical, i.e. should never be released, but does require only a small amount of throughput).
- It would impose to configure a weight in the RAN and in the GateWays (GW) to define the expected radio scheduling behavior as a function of the ARP. This weight would be defined locally in the RAN and in the GWs by O&M means: this would require coordinated OAM between the various RAN(s) (e.g. GERAN, UTRAN, EUTRAN) and the PGW/ GGSN. Furthermore this could not be always controlled by the Home operator.
- This would be a non standard behavior (some manufacturers might have implemented this, some not and there might be different ways of configuring the feature): the expected scheduling scheme might differ in a multi-vendor or roaming environment. Especially, the scheduler weight might vary differently as a function of the cell load.

A second approach could be based on QCI 6, 8 and 9 (in EUTRAN) or Traffic Handling Priority THP (in UTRAN).

This second approach for Evolved Packet Core (EPC) networks could consist of exploiting the fact that QCI 6, 8 and 9 apply all for non-GBR bearers and have the same packet delay budget and packet error loss, only the priority differs. This approach could be used to offer a minimum level of subscriber differentiation: QCI 6 could be assigned to Gold subscribers, QCI 8 to Sliver and QCI 9 to Bronze. This approach could be activated in 3G networks when the THP (Traffic Handling Priority) parameter is used to differentiate the radio scheduling schemes.

The main purpose of the QCI is to define the application requirements in terms of priority, packet delay budget and packet error loss. Extending its usage for subscriber differentiation would lead to additional complexity when new QCI(s) need to be introduced for application differentiation: each time a new QCI is required for application differentiation, actually as many QCI values would have to be defined as there are subscriber categories.

A third approach could be based on using the AMBR (Aggregate Maximum Bit Rate) defined per UE or per APN (Application Point Name).

Providing different AMBR values to different user classes could be a way to provide user differentiation while the QCI is used for service differentiation. The combination of (QCI, AMBR) thus would allow a combination of user and service differentiation. With this approach, the throughput allocated to a non-GBR bearer could be made proportional to the APN-AMBR, however this would apply independently of the network load situation. This is not a good approach when faced with such problem as "bandwidth hogging" or "flat-rate abusing". Such problem may be illustrated by considering an example of flat rate user, for example a user who pays a flat rate/month to consume as much as possible of non GBR traffic (up to a limit throughput of for example 2 Mb/s), but who is warned that above a certain consumption such as for example 1 Gb/week he/she may suffer from severe QoS degradation in congestion situations. One problem is to avoid that other flat rate users (not flat rate abusing) suffer from flat rate abusers in particular in congested situations, while not penalizing flat rate abusers in non congested situations. This third approach does not enable to solve such problem.

Thus, none of the above mentioned approaches is satisfying. There is a need for a different approach enabling to avoid part or all of the above mentioned drawbacks. More generally there is a need to improve QoS differentiation in mobile networks.

In embodiments described hereinafter, EPS will more particularly be considered, as an example to which the present invention applies. However the present invention is not limited to such example.

In embodiments described hereinafter, the case of non GBR (Guaranteed Bit Rate) bearers over a mobile network (such as a 3GPP network) will be considered.

In embodiments described hereinafter, it should be possible to differentiate end-users:

■ By the maximum cumulative non GBR throughput they can exchange (in a non congested situation)
■ By the way they are throttled by the network in case of congestion.

In embodiments described hereinafter, user differentiation is provided for traffic sent over both radio and backhaul links (including the terrestrial transmission links especially the link between the UTRAN or the eNB (Evolved Node B for ERAN) and the rest of the network).

In embodiments described hereinafter, traffic differentiation is provided, taking not only into account the class of service carried by an IP packet (corresponding to a QCI, QoS Class Indicator defined by 3GPP TS 23.203) but also taking into account the class of the user (e.g. Gold / Silver / Bronze subscription).

In embodiments described hereinafter, a unique parameter is used in case of congestion to handle traffic over both radio and backhaul links.

In embodiments described hereinafter, traffic of "bandwidth hogs" is throttled at RAN (Radio Access Network) such as UTRAN for UMTS and EUTRAN for LTE) in case of congestion but those "bandwidth hogs" are allowed to exchange traffic at their AMBR rate when the radio & Backhaul are not congested.

AMBR is the maximum bit rate to be granted (by subscription) to an user over all the non GBR Radio Bearers:

■ established for this user towards a given APN (Access Point Name) (APN-AMBR)
■ established for this user (UE-AMBR).

In an embodiment, user differentiation is provided, based on a QoS parameter representative of a bit rate, referred to as Weighted Fair Bit Rate WFBR, associated with a user and such that, in case of congestion, user traffic is throttled at a bit rate referred to as throttling bit rate, function of the WFBR associated with the user.

In an embodiment, a Radio Bearer not associated with a GBR (Guaranteed Bit Rate) is assigned a WFBR (Weighted Fair Bit Rate) per DL (Downlink) and UL (Uplink)) direction. The WFBR may be used as follows:

1) Use WFBR in PGW/GGSN and RAN to set a higher IP drop precedence to be used by intermediate routers (including the SGW) in case of congestion in the backhaul. Packets sent at a rate above the WFBR are given higher drop precedence.
2) As an alternative of 1), use WFBR in PGW/GGSN in DL and RAN in UL to assign a lower-priority bearer (E.g. QCI 9) to IP packets that are sent at a bit rate above the WFBR.
3) Throttle (at RAN) traffic of "bandwidth hogs" in case of congestion but allow those "bandwidth hogs" to exchange traffic up to the AMBR rate in case the radio & Backhaul are not congested. This applies for both Downlink/Uplink directions.

In an embodiment, in the RAN, once the GBR services have been served in a cell, the RAN may apply following algorithm:

- For the Downlink direction, WFBR is used by RAN to provide a relative throughput over the radio between Radio Bearer of the same QCI (used for user differentiation within a QCI): a Radio Bearer A with a WFBR-A twice the WFBR-B of another Radio Bearer B, gets twice the radio throughput (assuming similar radio conditions).

An example of application is where the Bandwidth granted in downlink to a Subscriber k is equal to the WFBR allocated to the Radio Bearer of this user k divided by the sum of the WFBR of all radio bearers of the same QCI competing for radio resources and multiplied by the Overall bandwidth available for this QCI i.e. it is equal to

$$\frac{WFBR_k}{\sum_i WFBR_i} \times \text{(Overall bandwidth available for non-GBR bearers within a given QCI).}$$

- For the Uplink direction, the RAN grants "radio tokens" to an UE (rights allocated to the UE to get an Uplink radio channel) at a pace proportional to the WFBR of this UE i.e. a similar formula would also apply for the RAN to grant "radio tokens" to non GBR UL Radio Bearers.

In an embodiment, WFBR can be also used to set an IP drop precedence (using the DSCP part of the outer IP header of GTP-u packets sent towards the RAN) in order that traffic on a bearer is marked as follows:

o Traffic under the WFBR is marked as a lower drop precedence
o Traffic between the WFBR and the AMBR is marked as "with higher drop precedence" (higher probability of being dropped)

o Traffic above the AMBR is dropped.

Thus in case of congestion the intermediate routers drop preferentially traffic that is sent over the network at a rate above the WFBR. As an alternative, IP packets received on a given bearer can be re-assigned to a lower priority bearer when the bit rate exceeds the WFBR. The setting of the drop precedence is in that case done per bearer.

The process described above may be enforced

■ In the RAN for the UL traffic, taking into account the UE-AMBR

■ In the PGW/GGSN for the DL traffic, taking into account the APN-AMBR

An embodiment (described later) is possible where for video flows the PGW/GGSN leverages knowledge of video frames to have an intelligent setting of the IP drop precedence.

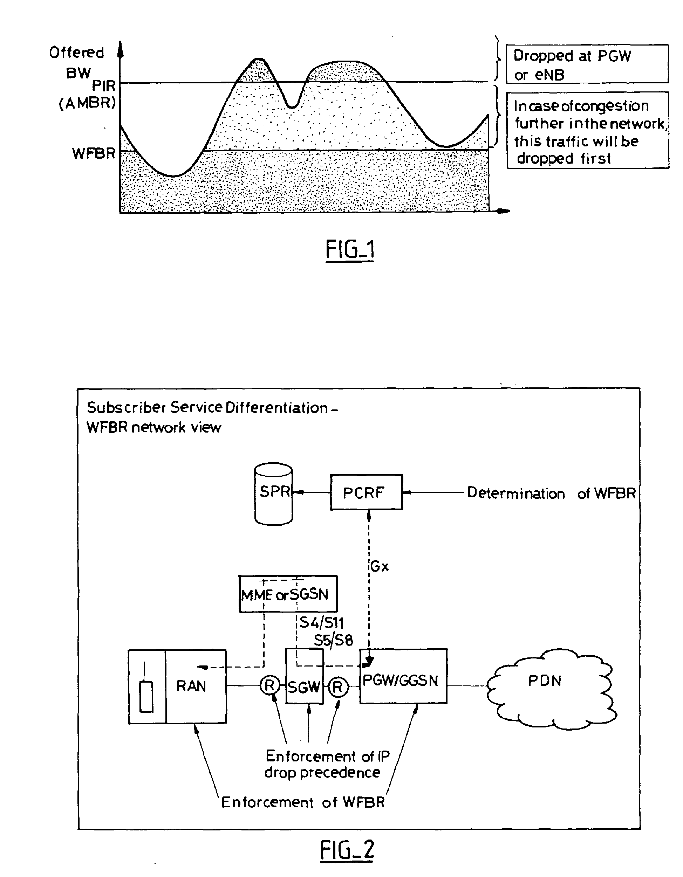

A way to see the WFBR is illustrated in Figure 1. Packets received below the WFBR are considered as in-profile and packets above as out-of-profile. In case of congestions, packets marked as out-of-profile are dropped first in a randomly manner (to avoid side effects at TCP application).

In general, WFBR is not a guaranteed bit rate, there is no Call Admission Control / Resource reservation associated with the WFBR.

In general, WFBR may be defined at different levels, such as per bearer or per aggregate of bearers (in particular aggregate of non-GBR bearers).

In an embodiment, WFBR is determined by PCRF, and passed via PGW/GGSN and then MME/SGW/SGSN to the RAN, as illustrated in Figure 2, according to procedures specified on the interfaces between these different nodes, including:

- policy control procedures on the Gx interface between PCFR and PGW (as specified in particular in 3GPP TS 29.212); this may also include the S9 interface between the H-PCRF in the Home Network and the V-PCRF in the Visited Network such as defined in 3gpp 29.215

- bearer establishment or modification procedures, including:

  • Procedures on the S5/S8 interface between PGW and SGW and procedures on the S11 interface between SGW and MME or on the S4 interface between SGW and SGSN (as specified in particular in 3GPP TS 29.274),

  • procedures between MME and EUTRAN (as specified in particular in 3GPP TS 36.413), or between SGSN and UTRAN (as specified in particular in 3GPP TS 29.060).

WFBR may be carried on the interfaces between the various nodes (e.g. the PCRF, the PGW/GGSN, the MME/SGN, the SGW, the RAN) using or needing to carry this information using various possibilities, for example:

- using a specific coding for an already existing QoS parameter: for example the MBR (Maximum Bit Rate) QoS parameter of a non GBR bearer not forced to 0 (as per current 3GPP Rel9 specs) but set at a non 0 WFBR (Weighted Fair Bit Rate) value, the GBR remaining to 0 to track that there is no guaranteed bit rate associated with a bearer, or in another example using a specific coding of another QoS parameter such as GBR (Guaranteed Bit rate),

- using a new QoS parameter.

It should be noted that the transport of the WFBR (by the MBR as indicated above) does not request protocol change (no new information element is required to be carried between nodes/Functions) but requires to change the behaviour of some nodes (PGW/GGSN, RAN) when they receive a non 0 MBR value for a non GBR bearer.

The PCRF may use following information to determine the WFBR

■ The subscriber category (retrieved from the SPR = Subscriber Policy Repository) = e.g. Gold/Silver/Bronze

■ Whether the user is a Bandwidth hog (e.g. determined by Usage measurement where the traffic exchanged for the user is measured via a sliding accumulation counter, whose value is compared to the maximum value put in the subscription (the 1 GB/week in the example mentioned above)

Only by way of example and for illustration purpose, following AMBR and WFBR (expressed in Mb/s) may be allocated by the PCRF

| User type | Bandwidth hog | AMBR | WFBR |
|-----------|---------------|------|------|
| **Gold** | N | 4 | 4 |
| | Y | 4 | 0,5 |
| **Silver** | N | 2 | 2 |
| | Y | 2 | 0,5 |
| **Bronze** | N | 0,5 | 0,5 |
| | Y | 0,5 | 0,25 |

An initial value of the WFBR may also be populated in HSS and provided as part of subscription data to the MME/SGSN.

An embodiment where for video flows the PGW/GGSN leverages some knowledge of video framing to have an intelligent setting of the IP drop precedence is now described. As an alternative, this approach can be easily modify to assign a lower priority bearer to IP packets that are out-of-profile.

For video traffic, the PGW/GGSN may leverage some knowledge of video framing to have an intelligent algorithm for discarding (per APN-AMBR) or for setting the drop precedence (per WFBR) downlink video traffic in excess. This may take the form of choosing preferentially for discarding (per APN-AMBR) or for setting the drop precedence (per WFBR):

　　o B frames (backward)
　　o Frames within the same GOP (Group of Frames) once an "I" or a "P" frame within that GOP has already been discarded

Video transfer protocols such as MPEG-2 specify that the raw video frames be compressed into three kinds of frames: intra-coded frames (I-frame), predictive-coded frames (P-frames), and bidirectionally-predictive-coded frames (B-frames). MPEG-2 was the second of several standards developed by the Moving Pictures Expert Group (MPEG) and is an international standard (ISO/IEC 13818).

An I-frame is a compressed version of a single uncompressed (raw) frame. Unlike P-frames and B-frames, I-frames do not depend on data in the preceding or the following frames.

The higher priority frames (I-frames) should be tagged in-profile to have more chance of being transmitted in case of network congestion.

This algorithm is e.g. to take into account information from within the RTP header such as the P picture bit of the RTP header per IETF RFC 2250 ("RTP Payload Format for MPEG1/MPEG2 Video"). RTP is the Transport Protocol for Real Time Applications specified in RFC 1889, January1996.

P: Picture-Type (3 bits). I(1), P (2), B (3) or D (4). This value is constant for each RTP packet of a given picture.

For this the PGW/GGSN needs to know that it is handling a RTP flow per RFC 2250 (MPEG2) and has to apply DPI (at least packet inspection at RTP level).

Embodiments of the present invention provide a number of advantages for a network operator, including main advantages detailed below.

Main values for a network operator include better differentiating the QoS between users (and not only differentiate between applications/services) and offering a key tool to throttle traffic of bandwidth hogs by discarding their traffic in periods of congestions.

Bandwidth hogs

The main interest of WFBR is the capacity of throttling bandwidth hogs (also called sometimes flat-rate abusers) while allowing those bandwidth hogs to use their full AMBR in non congested situation. As discussed above, without WFBR, the throughput allocated to a non-GBR bearer could be made proportional to the AMBR, but in that case, the bandwidth throttling would apply independently of the network load situation.

In addition, once the network has identified a bandwidth hogs, the PCRF can dynamically trigger a reduction of the WFBR. Thus, in case of cell congestion, such a subscriber will be assigned a lower bit rate than other subscribers. However, when the network is not loaded, the subscriber can still get a throughput up to its subscribed AMBR. Thus, the WFBR approach allows reducing the throughput of bandwidth hogs only whenever required, i.e. in the cases of cell / network congestion.

Easier inter-operability

By using the ARP or THP for subscriber differentiation, a weight needs to be provisioned in the RAN and in the GWs. In case of roaming or of multi-vendor environment, the ARP or THP field may then have a different meaning per network operator or per network supplier. Thus, the WFBR approach introduces a minimum level of standardization between the network operators and the mobile network suppliers to ease the network engineering.

To quantify the gain in terms of parameters, let take the example of a network operator with two suppliers for the RAN and the EPC part. In total, current implementation needs four parameters:

- The ARP defined per subscriber
- A weight defined per ARP in the various RAN (e.g. UTRAN, EUTRAN) of different manufacturers
- A weight defined per ARP in the SGW
- A weight defined per ARP in the PGW.

Assuming that only 3 ARP are used in the whole network, a network operator has to handle in total: 2 (RAN and EPC suppliers) x 2 (suppliers for EPC) x 3 (ARP values)*(1 (RAN weight) + 1 (SGW weight) + 1 (PGW weight)) = 18 parameters. In comparison, only one WFBR is required per subscriber.

Centralization of the subscriber-related information

To offer an efficient and flexible QoS control, the QoS-related parameters have been centralized in the PCRF. The use of ARP or THP for differentiating the radio scheduling requires the network operator to provision the scheduling weight parameters per ARP or THP in the RAN in the GWs. One advantage of the WFBR approach is that it can be provisioned dynamically (i.e. modified in real-time) from the PCRF and applied to the whole network per subscriber.

Enhanced application differentiation

Services for cloud computing will be likely offered over mobile networks in the coming years, firstly for corporate subscribers. Those services may need a finer QoS differentiation at application level. For instance, QCI-6 could be used for Web browsing (due to its required interactivity), QCI-8 for emails (less interactive), and QCI-9 for background software upgrades.

Current implementations cannot be applied here. Only would remain the ARP usage with the drawbacks of not being standardized for scheduling differentiation. The WFBR approach offers a good answer to those drawbacks. Compared to a non-corporate subscription, the WFBR could be made higher for Web browsing services (on QCI-6), while set to 0 or a low bit rate for QCI-8 and QCI-9 to let enough free bandwidth to non-corporate subscribers.

To quantify the gain of the WFBR approach, let us take the example of the ARP usage or QCI differentiation. QCI and ARP allow only a differentiation with 3 levels. An extension of ARP usage to 15 levels is foreseen in 3GPP Release 9. With the WFBR approach, the encoding allows a range from 0 to 100 Mbit/s per step of 1 kb/s (Current encoding of MBR and GBR in 3GPP Standard is even far higher).

In one aspect, in an embodiment, the present invention provides a method for providing enhanced Quality of Service (QoS) differentiation in a mobile communication system, said method comprising:

- providing user differentiation, based on a QoS parameter representative of a bit rate, referred to as Weighted Fair Bit Rate WFBR, associated with a user and such that, in case of congestion, user traffic is throttled at a bit rate referred to as throttling bit rate, function of the WFBR associated with the user.

In an embodiment, said traffic corresponds to Non Guaranteed Bit Rate Non-GBR traffic.

In an embodiment, in the absence of congestion, user traffic is not throttled and allowed up to a maximum authorized bit rate.

In an embodiment, the WFBR may be different for the Downlink (towards the UE) and Uplink (from the UE).

In an embodiment, said method comprises:

- a Core Network entity (PCRF) in charge of policy control determining WFBR.

In an embodiment, said method comprises:

- a Core Network entity (PCRF) in charge of policy control determining WFBR using subscriber category information.

In an embodiment, said method comprises:

- a Core Network entity (PCRF) in charge of policy control controlling WFBR as a function of user accumulated consumption.

In an embodiment, said method comprises:

- a Core Network entity (PCRF) in charge of policy control determining WFBR based on the user accumulated consumption and e.g. reducing it when the user accumulated consumption becomes higher than a predetermined limit.

In an embodiment, the consumption is accumulated over a sliding time period such as a day, a week, a month,...:
In an embodiment, said method comprises:

- Determining the throttling rate at which to throttle the traffic of an user based on the WFBR associated with the user, at an Access Network entity in charge of bearer services.

In an embodiment, said method comprises:

- a Radio Access Network entity (RAN) allocating a throughput over the radio interface, proportional to WFBR.

In an embodiment, said method comprises:

- a Radio Access Network entity (RAN) allocating Downlink throughput to non Guaranteed Bit Rate bearers over the radio interface, proportional to WFBR.

In an embodiment, said method comprises:

- for the Downlink direction, a Radio Access Network entity (RAN) granting to a user k a Bandwidth equal to the WFBR allocated to the Radio Bearer of this user k divided by the sum of the WFBR of all radio bearers of the same QoS Class Indicator QCI competing for radio resources and multiplied by the Overall bandwidth available for this QCI, i.e. equal to $\dfrac{WFBR_k}{\sum_i WFBR_i}$ x Overall bandwidth available for this QCI.

In an embodiment, said method comprises:

- for the Uplink direction, a Radio Access Network entity (RAN) granting to a User Equipment rights to get an Uplink radio channel at a pace proportional to the WFBR associated with the user.

In an embodiment, said method comprises:

- a Core Network entity (PGW/GGSN) in charge of bearer services, taking care that at transport network level, Downlink traffic sent towards an UE with a lower drop precedence is sent at a rate below WFBR.

In an embodiment, said method comprises:

- a Core Network entity (PGW/GGSN) in charge of bearer services, taking care that downlink traffic is reassigned to a lower-priority bearer when sent towards an UE within a bit rate above WFBR.

In an embodiment, said method comprises:

- a RAN Network Entity using the WFBR to re-assign to a lower-priority bearer the IP packets sent towards the network in uplink at a bit rate exceeding WFBR.

In an embodiment, said method comprises:

- a Core Network entity (PGW/GGSN) in charge of bearer services using WFBR to set an IP drop precedence in order that downlink traffic on a bearer is marked as follows:

    o Traffic under the WFBR is marked as lower drop precedence
    o Traffic between the WFBR and the AMBR is marked as higher drop precedence".

In an embodiment, said method comprises:

- a Radio Access Network entity using WFBR to set an IP drop precedence for Uplink traffic in order that traffic is marked as follows:

    o Traffic under the WFBR is marked as lower drop precedence
    o Traffic between the WFBR and the AMBR is marked as higher drop precedence".

In an embodiment, said method comprises:

- a Core Network entity (PCRF) in charge of policy control providing WFBR to a Core Network entity (PGW/GGSN) in charge of bearer services and interfacing with a Packet Data Network, according to policy control procedures.

In an embodiment, said method comprises:

- a Core Network entity (PGW/GGSN) in charge of bearer services and interfacing with a Packet Data Network PDN providing WFBR to a Core Network entity (SGW) in charge of bearer services and interfacing with the Radio Access Network in the user plane, according to bearer creation or modification procedures.

In an embodiment, said method comprises:

- a Core Network entity (SGW) in charge of bearer services and interfacing with the Radio Access Network in the user plane providing WFBR to a Core Network entity (MME or SGSN) in charge of bearer services and interfacing with the Radio Access Network in the control plane, according to bearer creation or modification procedures.

In an embodiment, said method comprises:

- a Core Network entity (MME or SGSN) in charge of bearer services and interfacing with the Radio Access Network in the control plane providing WFBR to a Radio Access Network entity (RAN), according to bearer creation or modification procedures.

In an embodiment, said method comprises:

- a Core Network entity (PGW/GGSN) in charge of bearer services and interfacing with a Packet Data Network PDN, receiving WFBR from a Core Network entity (PCRF) in charge of policy control, setting an IP drop precedence at transport network level, according to WFBR.

In another aspect, the present invention provides network entities comprising means for performing such method. Said network entities may include: network entity in charge of policy control (such as PCRF) and network entities in charge of bearer services (such as PGW, SGW, MME or S4 SGSN, and EUTRAN for EPS, or GGSN, SGSN and UTRAN for UMTS).
The detailed implementation of the above-mentioned means does not raise any special problem for a person skilled in the art, and therefore such means do not need to be more fully disclosed than has been made above, by their function, for a person skilled in the art.
A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method for providing enhanced Quality of Service QoS differentiation in a mobile communication system, said method comprising:

   - providing user differentiation, based on a QoS parameter representative of a bit rate, referred to as Weighted Fair Bit Rate WFBR, associated with a user and such that, in case of congestion, user traffic is throttled at a bit rate referred to as throttling bit rate, function of the WFBR associated with the user.

2. A method according to claim 1, wherein said traffic corresponds to Non Guaranteed Bit Rate Non-GBR traffic.

3. A method according to claim 1 or 2, wherein in the absence of congestion, user traffic is not throttled and allowed up to a maximum authorized bit rate.

4. A method according to any of claims 1 to 3, wherein the WFBR may be different for the Downlink (towards the UE) and Uplink (from the UE).

5. A method according to any of claims 1 to 4, comprising:

   - a Core Network entity (PCRF) in charge of policy control determining WFBR.

6. A method according to any of claims 1 to 5, comprising:

   - a Core Network entity (PCRF) in charge of policy control determining WFBR using subscriber category information.

7. A method according to any of claims 1 to 6, comprising:

   - a Core Network entity (PCRF) in charge of policy control controlling WFBR as a function of user accumulated consumption.

8. A method according to any of claims 1 to 7, comprising:

   - a Core Network entity (PCRF) in charge of policy control determining WFBR based on the user accumulated consumption and e.g. reducing it when the user accumulated consumption becomes higher than a predetermined limit.

9. A method according to claim 7 or 8, wherein the consumption is accumulated over a sliding time period such as a day, a week, a month,...:

10. A method according to any of claims 1 to 9, comprising:

    - Determining the throttling rate at which to throttle the traffic of an user based on the WFBR associated with the user, at an Access Network entity in charge of bearer services.

11. A method according to any of claims 1 to 10, comprising:

    - a Radio Access Network entity (RAN) allocating a throughput over the radio interface, proportional to WFBR.

12. A method according to any of claims 1 to 11, comprising:

    - a Radio Access Network entity (RAN) allocating Downlink throughput to non Guaranteed Bit Rate bearers over the radio interface, proportional to WFBR.

13. A method according to any of claims 1 to 12, comprising:

    - for the Downlink direction, a Radio Access Network entity (RAN) granting to a user k a Bandwidth equal to the WFBR allocated to the Radio Bearer of this user k divided by the sum of the WFBR of all radio bearers of the same QoS Class Indicator QCI competing for radio resources and multiplied by the Overall bandwidth available for this QCI, i.e. equal to $\dfrac{WFBR_k}{\sum_i WFBR_i}$ x Overall bandwidth available for this QCI.

14. A method according to any of claims 1 to 13, comprising:

- for the Uplink direction, a Radio Access Network entity (RAN) granting to a User Equipment rights to get an Uplink radio channel at a pace proportional to the WFBR associated with the user.

15. A method according to any of claims 1 to 14, comprising:

- a Core Network entity (PGW/GGSN) in charge of bearer services, taking care that at transport network level, Downlink traffic sent towards an UE with a lower drop precedence is sent at a rate below WFBR.

16. A method according to any of claims 1 to 15, comprising:

- a Core Network entity (PGW/GGSN) in charge of bearer services, taking care that downlink traffic is reassigned to a lower-priority bearer when sent towards an UE within a bit rate above WFBR.

17. A method according to any of claims 1 to 16, comprising:

- a RAN Network Entity using the WFBR to re-assign to a lower-priority bearer the IP packets sent towards the network in uplink at a bit rate exceeding WFBR.

18. A method according to any of claims 1 to 17, comprising:

- a Core Network entity (PGW/GGSN) in charge of bearer services using WFBR to set an IP drop precedence in order that downlink traffic on a bearer is marked as follows:

  o Traffic under the WFBR is marked as lower drop precedence
  o Traffic between the WFBR and the AMBR is marked as higher drop precedence".

19. A method according to any of claims 1 to 18, comprising:

- a Radio Access Network entity using WFBR to set an IP drop precedence for Uplink traffic in order that traffic is marked as follows:

  o Traffic under the WFBR is marked as lower drop precedence
  o Traffic between the WFBR and the AMBR is marked as higher drop precedence".

20. A method according to any of claims 1 to 19, comprising:

- a Core Network entity (PCRF) in charge of policy control providing WFBR to a Core Network entity (PGW/ GGSN) in charge of bearer services and interfacing with a Packet Data Network, according to policy control procedures.

21. A method according to any of claims 1 to 20, comprising:

- a Core Network entity (PGW/GGSN) in charge of bearer services and interfacing with a Packet Data Network PDN providing WFBR to a Core Network entity (SGW) in charge of bearer services and interfacing with the Radio Access Network in the user plane, according to bearer creation or modification procedures.

22. A method according to any of claims 1 to 21, comprising:

- a Core Network entity (SGW) in charge of bearer services and interfacing with the Radio Access Network in the user plane providing WFBR to a Core Network entity (MME or SGSN) in charge of bearer services and interfacing with the Radio Access Network in the control plane, according to bearer creation or modification procedures.

23. A method according to any of claims 1 to 22, comprising:

- a Core Network entity (MME or SGSN) in charge of bearer services and interfacing with the Radio Access Network in the control plane providing WFBR to a Radio Access Network entity (RAN), according to bearer creation or modification procedures.

24. A method according to any of claims 1 to 23, comprising:

- a Core Network entity (PGW/GGSN) in charge of bearer services and interfacing with a Packet Data Network PDN, receiving WFBR from a Core Network entity (PCRF) in charge of policy control, setting an IP drop precedence at transport network level, according to WFBR.

25. A network entity, comprising means for performing a method according to any of claims 1 to 24.

Offered BW<br>
PIR (AMBR)<br>
WFBR

Dropped at PGW or eNB

In case of congestion further in the network, this traffic will be dropped first

FIG_1

Subscriber Service Differentiation –<br>
WFBR network view

SPR ← PCRF ← —— Determination of WFBR

Gx

MME or SGSN

S4/S11
S5/S8

RAN —— Ⓡ SGW Ⓡ —— PGW/GGSN —— PDN

Enforcement of IP drop precedence

Enforcement of WFBR

FIG_2

Europäisches
Patentamt
European
Patent Office
Office européen
des brevets

# EUROPEAN SEARCH REPORT

**Application Number**

EP 10 29 0237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 154 837 A1 (VODAFONE PLC [GB]; VODAFONE ESPANA S A U [ES]) 17 February 2010 (2010-02-17) * paragraphs [0006] - [0019], [0045] - [0059] * ----- | 1-25 | INV. H04W28/16 H04L12/56 |
| X | US 2005/052992 A1 (CLOONAN THOMAS J [US] ET AL) 10 March 2005 (2005-03-10) * paragraphs [0009] - [0016], [0045], [0048], [0052] - [0055], [0066], [0088], [0090], [0092], [0101], [0102] * ----- | 1,3,7-9, 25 | |
| X | US 6 473 793 B1 (DILLON DOUGLAS M [US] ET AL) 29 October 2002 (2002-10-29) * column 2, lines 11-17,39-41,54-57, * * column 6, lines 66-67 * * column 9, lines 1-12,43-59 * * column 14, line 43 - column 15, line 20 * * column 16, lines 38-56 * ----- | 1,25 | |

|  |  |  | **TECHNICAL FIELDS SEARCHED (IPC)** |
|---|---|---|---|
|  |  |  | H04W H04L |

The present search report has been drawn up for all claims

| Place of search | Date of completion of the search | Examiner |
|---|---|---|
| The Hague | 3 August 2010 | Tsuchiya, Kuni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 29 0237

This annex lists the patent family members relating to the patent documents cited in  the above-mentioned European search report.
The members are as contained in the European Patent Office EDP file on
The European Patent Office is in no way liable for these particulars which are merely given for the purpose of information.

03-08-2010

| Patent document cited in search report | | Publication date | Patent family member(s) | | Publication date |
|---|---|---|---|---|---|
| EP 2154837 | A1 | 17-02-2010 | ES | 2334963 A1 | 17-03-2010 |
| US 2005052992 | A1 | 10-03-2005 | NONE | | |
| US 6473793 | B1 | 29-10-2002 | NONE | | |

EPO FORM P0459

For more details about this annex : see Official Journal of the European Patent Office, No. 12/82